# EUROPÄISCHE PATENTANMELDUNG

(11) **EP 2 233 771 A2**
(43) Veröffentlichungstag der Anmeldung: **29.09.2010**
(21) Anmeldenummer: 10151621.9
(22) Anmeldetag: 26.01.2010
(51) Int. Cl.: F16F 9/34, F16F 9/46

(54) **Schieber für einen Fahrzeugdämpfer und zugehöriger Fahrzeugdämpfer**

(30) Priorität: 24.03.2009 DE 102009001785
(71) Anmelder: Robert Bosch GmbH, 70442 Stuttgart (DE)
(72) Erfinder: Kratzer, Dietmar, 71732 Tamm (DE)

(57) **Zusammenfassung**

Die Erfindung betrifft Schieber (28) für einen Fahrzeugdämpfer, wobei mit dem Schieber (28) zur Einstellung von Dämpferkennwerten ein Durchfluss eines Dämpferfluids durch mindestens einen Durchflusskanal (20a, 20b) regelbar ist, mit einem Getriebeelement (30a), das eine Zähne (30a.1, 30a.2) und Zahnzwischenräume (30a.3, 30a.4) umfassende Verzahnung aufweist. Erfindungsgemäß sind die Zahnzwischenräume (30a.3, 30a.4) als durch den Schieber (28) durchgehende Ausnehmungen ausgeführt.

## Beschreibung

### Stand der Technik

Die Erfindung geht aus von einem Schieber für einen Fahrzeugdämpfer nach der Gattung des unabhängigen Patentanspruchs 1 und einen korrespondierenden Dämpfer für ein Fahrzeug, der mindestens einen solchen Schieber umfasst.

In der Offenlegungsschrift DE 10 2007 025 966 A1 wird ein Dämpfer für ein Fahrzeug beschrieben. Der beschriebene Dämpfer umfasst einen mit einem Dämpferfluid befüllten Dämpferzylinder, in welchem ein Kolbenstempel über eine Kolbenstange geführt ist. Bei einer axialen Bewegung der Kolbenstange und damit des Kolbenstempels gegenüber dem Dämpferzylinder muss das Dämpferfluid durch eine innerhalb des Dämpferzylinders angeordnete Durchflusseinrichtung fließen. Durch den Widerstand, welcher dem Dämpferfluid hierbei entgegengebracht wird, werden Druckdifferenzen erzeugt, die über Wirkflächen Dämpfungskräfte erzeugen. Damit der Dämpfer in zwei Richtungen Dämpfungsarbeit ausüben kann und somit sowohl beim so genannten Ausfedern als auch beim so genannten Einfedern dämpft, weist die Durchflusseinrichtung eine in eine erste Durchflussrichtung wirkende Druckstufe und eine in eine zweite Durchflussrichtung wirkende Zugstufe auf. Zur Regelung des Dämpferfluidstroms in der Durchflusseinrichtung ist eine Verstelleinrichtung mit Verstellmitteln vorgesehen, die eine Federpaketeinheit, eine Getriebeeinheit und einen über der Federpaketeinheit angeordneten, verschiebbaren Schieber mit einem Getriebeelement umfassen. Das Getriebeelement des Schiebers weist eine Verzahnung mit Zähnen und Zahnzwischenräumen auf. Üblicherweise wird der Dämpfer bei seiner Herstellung einmalig mit Dämpferfluid befüllt, welches über die gesamte Lebensdauer des Dämpfers in der einen geschlossenen Kreislauf bildenden Durchflusseinrichtung umläuft.

### Offenbarung der Erfindung

Der erfindungsgemäße Dämpfer mit den Merkmalen des unabhängigen Patentanspruchs 1 hat demgegenüber den Vorteil, dass die Zahnzwischenräume als durch den Schieber durchgehende Ausnehmungen ausgeführt sind. Hierdurch bildet die Verzahnung des Getriebeelementes ein durchgehendes Profil und ermöglicht somit eine besonders aufwandsreduzierte Herstellung des Schiebers, da die Verzahnung beispielsweise durch einfaches und kostengünstiges Durchstanzen des Schiebers herstellbar ist. Insbesondere ist hiermit eine großserientaugliche Herstellung des Schiebers möglich.

Ein erfindungsgemäßer Dämpfer für ein Fahrzeug umfasst zur Regelung einer Dämpferfluidströmung in mindestens einem Durchflusskanal mindestens einen erfindungsgemäßen Schieber, um Dämpferkennwerte des Fahrzeugdämpfers einzustellen.

Durch die in den abhängigen Ansprüchen aufgeführten Maßnahmen und Weiterbildungen sind vorteilhafte Verbesserungen des im unabhängigen Patentanspruch 1 angegebenen Schiebers möglich.

Bevorzugt weist der Schieber ein Bodensegment und zwei sich jeweils an das Bodensegment anschließende, in Richtung einer Hochachse über das Bodensegment überstehende Seitensegmente auf. In einer Ausgestaltung des erfindungsgemäßen Schiebers ist das Getriebeelement mindestens teilweise in ein Seitensegment integriert. In vorteilhafter Weise ist hierdurch ein Getriebeelement der Verstelleinrichtung auf einfache Weise in den Schieber integriert, so dass auf ein zusätzliches Bauteil verzichtet werden kann. Ein wesentlicher Vorteil besteht somit in der einfachen Herstellung und im geringen Platzbedarf des Getriebeelementes und der dadurch erreichten Kostenersparnis.

In einer Ausgestaltung des erfindungsgemäßen Schiebers sind die Zahnzwischenräume in dem Seitensegment eingebracht. In einer weiteren Ausgestaltung des erfindungsgemäßen Schiebers sind die Zahnzwischenräume in dem Seitensegment und in dem Mittelsegment eingebracht. Dies ermöglicht große Freiheiten in Bezug auf die Geometrien der Verzahnung. Beispielsweise kann die Verzahnung auf einfache Weise hinsichtlich Zahnform und/oder Zahnauslauf günstig gestaltet werden. Der Zahnauslauf kann beispielweise ohne Stanzgrat und festigkeitsoptimiert ausgeführt werden.

In vorteilhafter Weise ist die Verzahnung des Getriebeelements als Evolventenverzahnung ausgeführt. Bei optimaler Auslegung der Evolventenverzahnung befindet sich immer mindestens ein Zahnpaar im Eingriff. Hierdurch ermöglicht die Evolventenverzahnung in vorteilhafter Weise eine gleichmäßige Übertragung von Drehmomenten auf Grund einer konstanten Übersetzung.

In einer Ausgestaltung des erfindungsgemäßen Schiebers weist ein Bodenbereich des Schiebers eine Wölbung in Richtung einer Längsachse auf. Der Bodenbereich des Schiebers bildet die Anlagefläche für die darunter liegende Federpaketeinheit. In vorteilhafter Weise ergibt sich durch die Wölbung des Bodenbereiches ein leichteres und reibungsärmeres Verschieben des Schiebers über die Federpaketeinheit.

Der erfindungsgemäße Schieber ermöglicht eine Herstellung aus einem stranggepressten Profil. Auf Grund der vereinfachten Herstellungsmöglichkeit der Verzahnung ergibt sich eine einfache und kostengünstige Herstellung des Schiebers, indem ein Schieberrohling aus einem stranggepressten Profil vorgesehen ist, das abgelängt und durchgestanzt wird.

Besonders vorteilhaft ist, dass die Schiebereinheit als Verschiebeelement ausgebildet ist, das in einer Ausnehmung des Antriebsgehäuses verschiebbar ist. In vorteilhafter Weise ergibt sich hierdurch eine prozesssichere Zwangsführung der Schiebereinheit, wodurch sich eine sichere Regelung der Dämpferfluidströmung in mindestens einem Durchflusskanal ergibt.

Ausführungsbeispiele der Erfindung sind in den Zeichnungen dargestellt und werden in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2 zeigt eine Draufsicht auf ein Ausführungsbeispiel des Kolbenstempels mit einem Stempelrohr und einem in dem Stempelrohr angeordneten Antriebsgehäuse.
Figur 3 zeigt eine perspektivische Darstellung des Antriebsgehäuses mit einer Durchflusseinrichtung und einer Verstelleinrichtung mit Verstellmitteln, die eine Federpaketeinheit, einen Schieber und eine Getriebeeinheit aufweist.
Figur 4 zeigt eine Draufsicht auf einen erfindungsgemäßen Schieber gemäß einem ersten Ausführungsbeispiel mit einem Zähne und Zahnzwischenräume aufweisenden Getriebeelement.
Figur 5 zeigt einen Schnitt A-A durch den Schieber gemäß Fig. 4.
Figur 6 zeigt eine Draufsicht auf einen erfindungsgemäßen Schieber gemäß einem zweiten Ausführungsbeispiel.
Figur 7 zeigt einen Schnitt B-B durch den Schieber gemäß Fig. 6.

### Ausführungsformen der Erfindung

In den Figuren werden gleiche oder im Wesentlichen gleich bleibende Elemente mit den gleichen Bezugszeichen versehen.

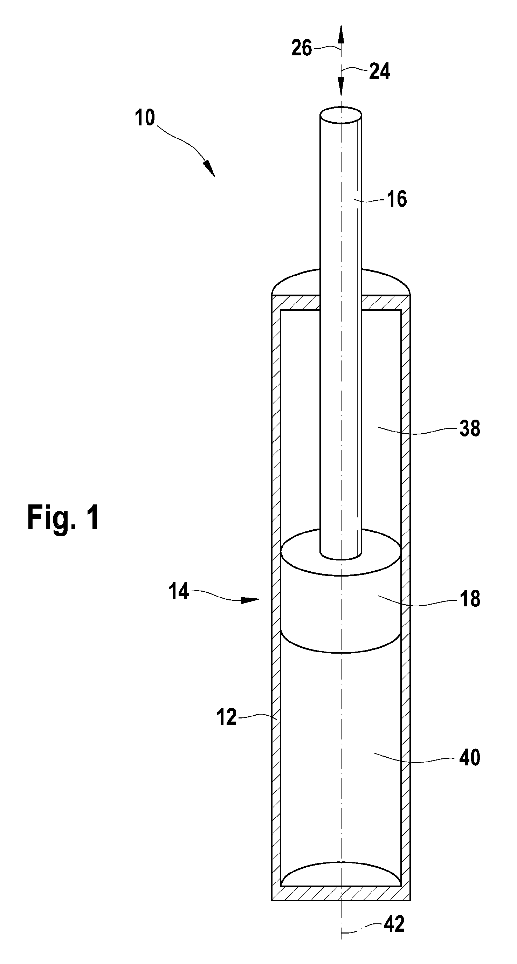

Wie aus Fig. 1 ersichtlich ist, umfasst ein erfindungsgemäßer Dämpfer 10, der vorzugsweise als Stoßdämpfer eines Fahrzeugs ausgeführt ist, einen mit einem Dämpferfluid befüllten Dämpferzylinder 12, in dem eine Kolbeneinheit 14 beweglich angeordnet ist, die eine Kolbenstange 16 und einen Kolbenstempel 18 umfasst, wobei der Kolbenstempel 18 über die Kolbenstange 16 in dem Dämpferzylinder 12 geführt wird. Der Kolbenstempel 18 teilt den Dämpferzylinder 12 in eine obere Dämpferkammer 38 und in eine untere Dämpferkammer 40. Bei einer axialen, vorzugsweise in Richtung einer Hochachse 42 des Dämpfers 10 verlaufenden Bewegung der Kolbenstange 16 und damit des Kolbenstempels 18 gegenüber dem Dämpferzylinder 12 muss das Dämpferfluid durch eine innerhalb des Dämpferzylinders 12 angeordnete Durchflusseinrichtung 20 fließen, die vorzugsweise zwei Durchflusskanäle 20a, 20b aufweist.

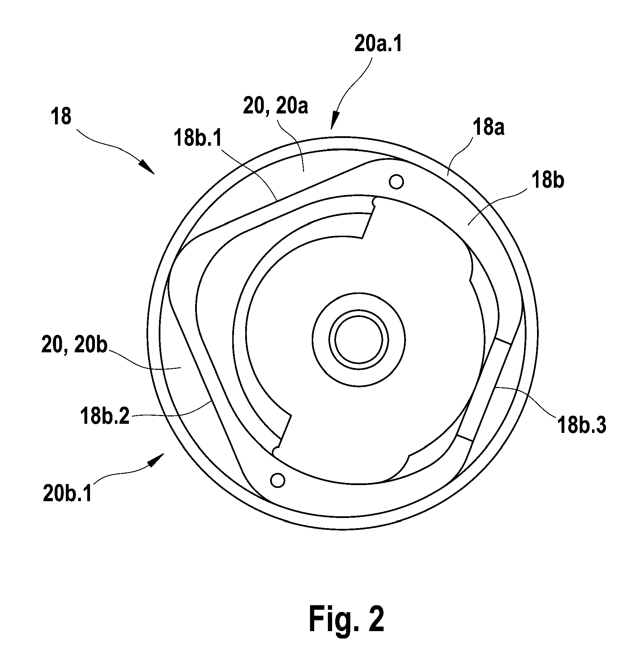

Wie aus Fig. 2 ersichtlich, ist der Kolbenstempel 18 als kompakte Einheit ausgeführt. Der Kolbenstempel 18 umfasst ein Stempelrohr 18a, das beispielsweise als dünnwandiges Stahlrohr ausgeführt ist, und ein innerhalb des Stempelrohres 18a angeordnetes Antriebsgehäuse 18b, welches eine hier nicht dargestellte Antriebseinheit aufnimmt. Die Geometrien des Stempelrohres 18a und des Antriebsgehäuses 18b bilden gemeinsam die beiden Durchflusskanäle 20a und 20b der Durchflusseinrichtung 20. Hierzu ist das Antriebsgehäuse 18b im Wesentlichen zylinderförmig ausgebildet und weist an seinem Umfang vorzugsweise drei Abplattungen 18b.1, 18b.2, 18b.3 auf, die drei ebene Flächen bilden. Wie insbesondere aus Fig. 2 ersichtlich ist, bilden zwei Abplattungen 18b.1, 18b.2 des Antriebsgehäuses 18b im vorliegenden Ausführungsbeispiel zusammen mit dem Stempelrohr 18a die aus freien Querschnitten 20a.1, 20b.1 gebildeten Durchflusskanäle 20a, 20b der Durchflusseinrichtung 20 zum Durchfluss des Dämpferfluids, d.h. die Durchflusskanäle 20a, 20b sind im Wesentlichen zwischen den Abplattungen 18b.1, 18b.2 des Antriebsgehäuses 18b und der Innenwand des Stempelrohres 18a angeordnet. Die dritte Abplattung 18b.3 bildet mit der Innenwand des Stempelrohres 18a im dargestellten Ausführungsbeispiel einen Versorgungskanal, der beispielsweise zur elektrischen Kontaktierung der nicht dargestellten Antriebseinheit verwendet werden kann, wobei die Antriebseinheit beispielsweise als Drehmagnetantrieb ausgeführt sein kann.

Die Durchflusseinrichtung 20 umfasst mindestens eine in eine erste Durchflussrichtung 24 wirkende Zugstufe und/oder mindestens eine in eine zweite Durchflussrichtung 26 wirkende Druckstufe. Im vorliegenden Ausführungsbeispiel wirkt die Zugstufe im Durchflusskanal 20a und die Druckstufe im Durchflusskanal 20b. Die Durchflussrichtung 24, 26 der beiden Durchflusskanäle 20a, 20b ist entgegengesetzt, wobei sich die jeweilige Richtung innerhalb eines Kanals 20a, 20b nicht ändert. Vorzugsweise bildet die Durchflusseinrichtung 20 einen geschlossenen Kreislauf.

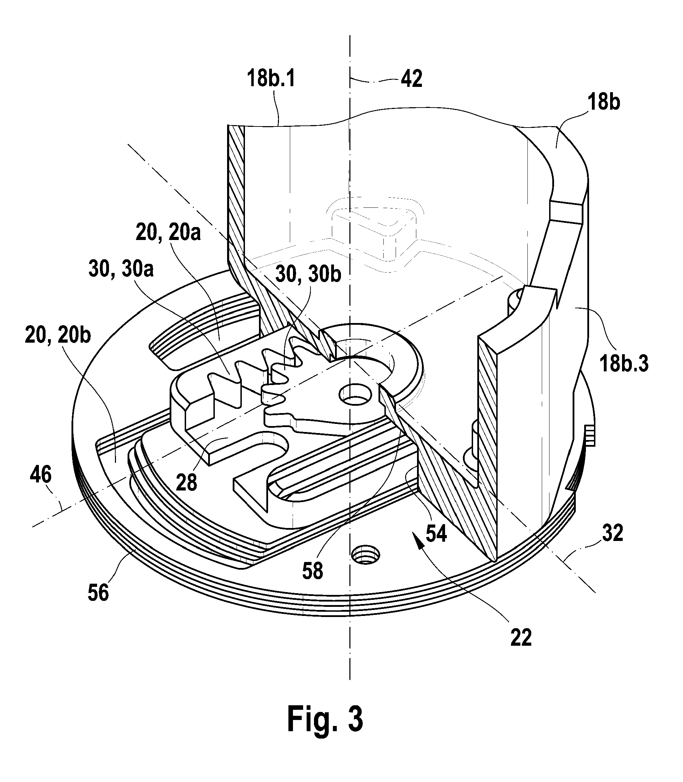

Wie aus der Fig. 3 ersichtlich, ist innerhalb des Dämpferzylinders 12 eine Verstelleinrichtung 22 zur Regelung des Dämpferfluidstroms in der Durchflusseinrichtung 20 mit Verstellmitteln 28, 30, 56 angeordnet, welche eine Federpaketeinheit 56, einen über der Federpaketeinheit 56 angeordneten, verschiebbaren Schieber 28 und eine Getriebeeinheit 30 umfassen. Der Schieber 28 schließt sich an das Antriebsgehäuse 18b, bevorzugt an einen geodätisch untenliegenden Bodenbereich des Antriebsgehäuse 18b an. Im vorliegenden Ausführungsbeispiel grenzt der Schieber 28 unmittelbar an das Antriebsgehäuse 18b bzw. an den Boden 58 des Antriebsgehäuses 18b an. Im vorliegenden Ausführungsbeispiel ist der Schieber 28 als Verschiebeelement ausgebildet, das in einer im Boden 58 des Antriebsgehäuses 18b ausgebildeten Ausnehmung 54 des Antriebsgehäuses 18b entlang einer Längsachse 46 auf der Federpaketeinheit 56 verschiebbar ist.

Die Getriebeeinheit 30 weist ein erstes, mit dem Schieber 28 in Wirkverbindung stehendes Getriebeelement 30a auf, in das ein zweites, mit der Antriebseinheit in Wirkverbindung stehendes Getriebeelement 30b eingreift. Das erste Getriebeelement 30a weist Zähne 30a.1, 30a.2 und Zahnzwischenräume 30a.3, 30a.4 auf. Im vorliegenden Ausführungsbeispiel ist das erste Getriebeelement 30a vorzugsweise einstückig mit dem Schieber 28 ausgeführt.

Im vorliegenden Ausführungsbeispiel ist das erste Getriebeelement 30a als Zahnstangensegment ausgeführt, in welches das zweite, als Zahnradsegment ausgeführte Getriebeelement 30b eingreift, welches zur Positionsveränderung des Schiebers 28 von der korrespondierenden, hier nicht dargestellten Antriebseinheit bewegt wird. Im vorliegenden Ausführungsbeispiel wandelt daher die Getriebeeinheit 30, 30a und 30b eine Rotationsbewegung der Antriebseinheit in eine Translationsbewegung des Schiebers 28 in Richtung der Längsachse 46 um, indem die Antriebseinheit das Zahnradsegment 30b mit einer Rotationsbewegung beaufschlagt, welches in das Zahnstangensegment 30a eingreift und dieses in eine Translationsbewegung versetzt. D.h. zum Verschieben des Schiebers 28 weist die Getriebeeinheit 30 das Zahnstangensegment 30a auf, in welches das Zahnradsegment 30b eingreift, das zur Positionsveränderung des Schiebers 28 von der korrespondierenden Antriebseinheit gedreht wird. Zur Einstellung des Dämpferfluidstroms in der Durchflusseinrichtung 20 wird die Verstelleinrichtung 22 aktiviert, indem der Schieber 28 der Verstelleinrichtung 22 verschoben wird.

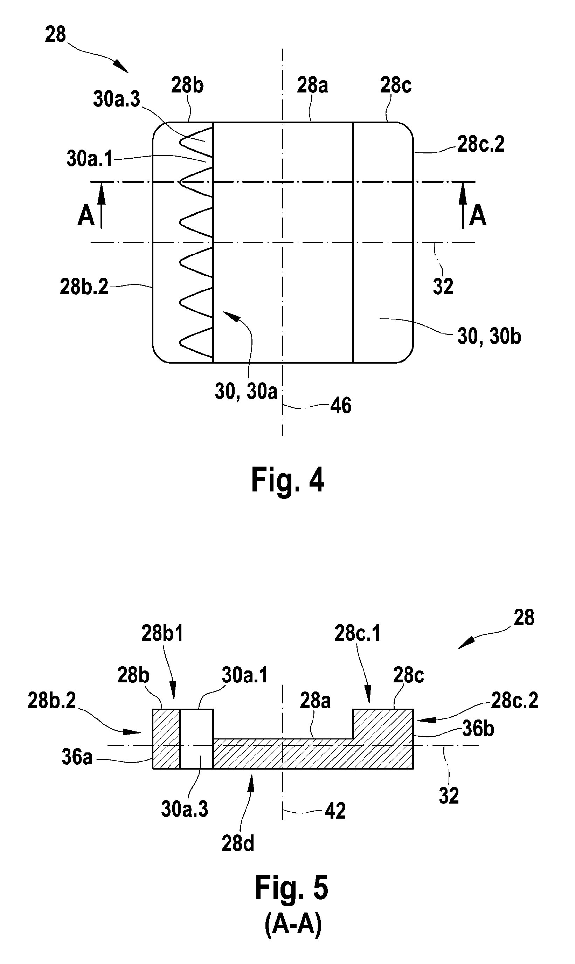

Um eine einfache und kostengünstige Herstellung des Schiebers 28 zu ermöglichen, sind, wie aus Fig. 4 bis 7 ersichtlich, erfindungsgemäß die Zahnzwischenräume 30a.3, 30a.4 des Getriebeelementes 30a als durch den Schieber 28 vorzugsweise in Richtung einer Hochachse 42 durchgehende Ausnehmungen ausgeführt. Im vorliegenden Ausführungsbeispiel weist der Schieber 28 ein Mittelsegment 28a und zwei sich jeweils an das Mittelsegment 28a anschließende, in Richtung der Hochachse 42 über das Mittelsegment 28a überstehende Seitensegmente 28b, 28c auf, welche sich bevorzugt gegenüberliegen. Das Mittelsegment 28a und die beiden Seitensegmente 28b, 28c bilden gemeinsam einen flächigen Bodenbereich 28d des Schiebers 28 aus.

Um eine sichere seitliche Führung des Schiebers 28 in der Ausnehmung 54 des Antriebsgehäuses 18b zu erreichen, sind die in Richtung einer Querachse 32 außen liegenden Bereiche 28b.2, 28c.2 der Seitensegmente 28b, 28c als im Wesentlichen senkrecht zum Bodenbereich 28d des Schiebers 28 beziehungsweise zur Federpaketeinheit 56 verlaufende Seitenstege 36a, 36b ausgebildet.

Um ein leichteres und reibungsärmeres Verschieben des Schiebers 28 über die Federpaketeinheit 56 zu ermöglichen, weist der flächige Bodenbereich 28d des Schiebers 28 eine Wölbung in Richtung der Längsachse 46 auf. Vorzugsweise handelt es sich dabei um eine konvexe Wölbung, d.h. der Bodenbereich 28d ist nach außen gewölbt.

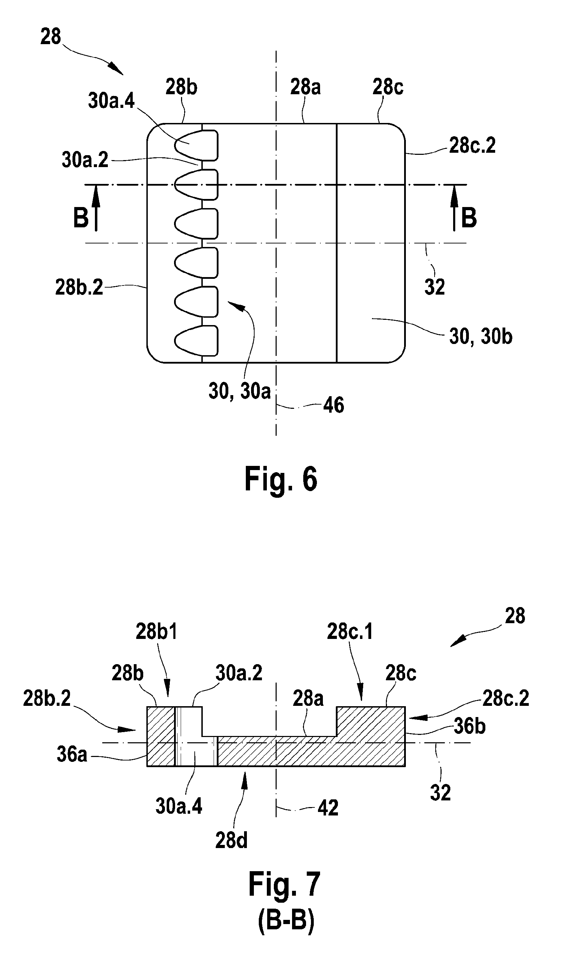

Vorzugsweise ist das Getriebeelement 30a mindestens teilweise in ein Seitensegment 28b, 28c integriert. Im vorliegenden Ausführungsbeispiel ist das Getriebeelement 30a mindestens teilweise in das Seitensegment 28b integriert, indem das Getriebeelement 30a und das Seitensegment 28b einstückig ausgebildet sind. Der Seitenabschnitt 28b weist in einem dem anderen Seitensegment 28c zugewandten Bereich eine Zähne 30a.1, 30a.2 und Zahnzwischenräume 30a.3, 30a.4 umfassende Verzahnung auf, wobei der Seitenabschnitt 28b als Zahnstangensegment der Getriebeeinheit 30 ausgebildet ist, beziehungsweise die Funktion eines Zahnstangensegments der Getriebeeinheit 30 ausübt. D.h. zum Verschieben des Schiebers 28 weist der Seitenabschnitt 28b die Zähne 30a.1, 30a.2 auf, in welche die Zähne des Zahnradsegments 30b der Getriebeeinheit 30 eingreifen, welches zur Positionsveränderung des Schiebers 28 von der korrespondierenden Antriebseinheit gedreht wird. In einem ersten Ausführungsbeispiel gemäß Fig. 4 und 5 sind die Zahnzwischenräume 30a.3 in dem Seitensegment 28b eingebracht. In einem zweiten Ausführungsbeispiel gemäß Fig. 6 und 7 sind die Zahnzwischenräume 30a.4 in dem Seitensegment 28b und in dem Mittelsegment 28a eingebracht. Vorzugsweise ist die Verzahnung 30a.1, 30a.2, 30a.3, 30a.4 des Getriebeelements 30a als Evolventenverzahnung ausgeführt.

Vorzugsweise ist der Schieber 28 aus einem stranggepressten Profil hergestellt. Die Verzahnung 30a.1, 30a.2, 30a.3, 30a.4 wird in vorteilhafter Weise bevorzugt mittels Durchstanzen hergestellt.

Um die Bildung eines Dämpferfluidfilmes zwischen Schieber 28 und dem über dem Schieber 28 liegenden beziehungsweise angeordneten Antriebsgehäuse 18b zu ermöglichen, weist mindestens ein Seitensegment 28b, 28c in einem dem Bodenbereich 28d gegenüberliegenden Bereich 28b.1, 28c.1 eine hier nicht sichtbare Wölbung auf. Vorzugsweise handelt es sich dabei um eine konvexe Wölbung, d.h. der Bereich 28b.1, 28c.1 ist nach außen beziehungsweise von dem Bodenbereich 28d weg gewölbt. Im Betrieb des Schiebers 28 übernehmen diese Bereiche 28b.1, 28c.1 der Seitensegmente 28b, 28c die Abstützung gegen über dem Schieber 28 liegende Bauteile, wie beispielsweise das Antriebsgehäuse 18b. Die leichte Wölbung der Bereiche 28b.1, 28c.1 ermöglicht einen verbesserten Dämpferfluidfilm zwischen der Fläche des Schiebers 28 und dem darüber liegenden Antriebsgehäuse 18b, so dass ein sicheres und reibungsärmeres Verschieben des Schiebers 28 möglich ist.

Ein erfindungsgemäßer Dämpfer für ein Fahrzeug umfasst zur Regelung einer Dämpferfluidströmung in mindestens einem Durchflusskanal mindestens einen erfindungsgemäßen Schieber, um Dämpferkennwerte des Fahrzeugdämpfers einzustellen.

## Patentansprüche

1. Schieber (28) für einen Fahrzeugdämpfer, wobei mit dem Schieber (28) zur Einstellung von Dämpferkennwerten ein Durchfluss eines Dämpferfluids durch mindestens einen Durchflusskanal (20a, 20b) regelbar ist, mit einem Getriebeelement (30a), das eine Zähne (30a.1, 30a.2) und Zahnzwischenräume (30a.3, 30a.4) umfassende Verzahnung aufweist, **dadurch gekennzeichnet, dass** die Zahnzwischenräume (30a.3, 30a.4) als durch den Schieber (28) durchgehende Ausnehmungen ausgeführt sind.

2. Schieber nach Anspruch 1, **dadurch gekennzeichnet, dass** der Schieber (28) ein Mittelsegment (28a) und zwei sich jeweils an das Mittelsegment (28a) anschließende, in Richtung einer Hochachse (42) über das Mittelsegment (28a) überstehende Seitensegmente (28b, 28c) aufweist.

3. Schieber nach Anspruch 2, **dadurch gekennzeichnet, dass** das Getriebeelement (30a) mindestens teilweise in ein Seitensegment (28b, 28c) integriert ist.

4. Schieber nach Anspruch 2 oder 3, **dadurch gekennzeichnet, dass** die Zahnzwischenräume (30a.3) in dem Seitensegment (28b, 28c) eingebracht sind.

5. Schieber nach einem der Ansprüche 2 bis 4, **dadurch gekennzeichnet, dass** die Zahnzwischenräume (30a.4) in dem Seitensegment (28b, 28c) und in dem Mittelsegment (28a) eingebracht sind.

6. Schieber nach einem der Ansprüche 1 bis 5, **dadurch gekennzeichnet, dass** die Verzahnung (30a.1, 30a.2, 30a.3, 30a.4) des Getriebeelements (30a) als Evolventenverzahnung ausgeführt ist.

7. Schieber nach einem der Ansprüche 1 bis 6, **dadurch gekennzeichnet, dass** ein Bodenbereich (28d) des Schiebers (28) eine Wölbung in Richtung einer Längsachse (46) aufweist.

8. Schieber nach einem der Ansprüche 1 bis 7, **gekennzeichnet durch** eine Herstellung aus einem stranggepressten Profil.

9. Dämpfer (10) für ein Fahrzeug, wobei zur Einstellung von Dämpferkennwerten ein Fluss eines Dämpferfluids durch mindestens einen Durchflusskanal (20a, 20b) mit Verstellmitteln (28, 30, 56) regelbar ist, **dadurch gekennzeichnet, dass** die Verstellmittel mindestens einen Schieber (28) nach einem der Ansprüche 1 bis 8 umfassen.

10. Dämpfer nach Anspruch 9, **dadurch gekennzeichnet, dass** der Schieber (28) als Verschiebeelement ausgebildet ist, das in einer Ausnehmung (54) eines Antriebsgehäuses (18b) des Dämpfers (10) verschiebbar ist.
